# EUROPEAN PATENT APPLICATION

(11) **EP 4 181 408 A1**
(43) Date of publication of application: **17.05.2023**
(21) Application number: 21874120.5
(22) Date of filing: 19.08.2021
(51) Int. Cl.: H04B 1/50, H04B 17/11, H04B 17/21

(54) **COMMUNICATION DEVICE, CONTROL METHOD, BASE STATION AND COMPUTER-READABLE STORAGE MEDIUM**

(30) Priority: 29.09.2020 CN 202011049878
(71) Applicant: ZTE Corporation, Shenzhen, Guangdong 518057 (CN)
(72) Inventor: ZHANG, Xingmin, Shenzhen, Guangdong 518057 (CN); WEI, Zhaobi, Shenzhen, Guangdong 518057 (CN); WANG, Shan, Shenzhen, Guangdong 518057 (CN); JIANG, Yuting, Shenzhen, Guangdong 518057 (CN)
(74) Representative: Canzler & Bergmeier Patentanwälte Partnerschaft mbB
(86) International application number: PCT/CN2021/113570
(87) International publication number: WO 2022/068458

(57) **Abstract**

A communication device, a control method, a base station and a computer-readable storage medium. The communication device comprises a transmitting link, a receiving link, an antenna module, a coupling module, a correction frequency conversion module and a logic module, wherein the antenna module is respectively connected to the transmitting link and the receiving link; the coupling module is respectively connected to the transmitting link, the receiving link and the antenna module; the correction frequency conversion module is arranged on the transmitting link and/or the receiving link; when the correction frequency conversion module is arranged on the transmitting link, the correction frequency conversion module is controlled to work, the transmitting link can transmit a first correction signal of a second frequency point, and the receiving link can receive the first correction signal and transmit same to the logic module to correct a radio frequency signal; and when the correction frequency conversion module is arranged on the receiving link, the transmitting link can transmit a second correction signal of a first frequency point, and the correction frequency conversion module is controlled to work, such that the receiving link can receive the second correction signal and transmit same to the logic module to correct the radio frequency signal.

## Description

### CROSS-REFERENCE TO RELATED APPLICATION

This application is filed on the basis of Chinese patent application No. 202011049878.6 filed September 29, 2020, and claims priority to the Chinese patent application, the entire contents of which are incorporated herein by reference.

### TECHNICAL FIELD

Embodiments of the present disclosure relate to, but not limited to, the technical field of communications, and more particularly, to a communication device, a control method, a base station and a computer-readable storage medium.

### BACKGROUND

Antenna correction technology is one of the cores of beamforming technology, and is a prerequisite for realizing the advantages of large-scale Multiple Input Multiple Output (MIMO) technology. Because a Frequency Division Duplexing (FDD) system uses different frequencies for transmitting and receiving, in conventional schemes, a transmitting link cannot be used to send a correction sequence for a receiving frequency band, and a receiving link cannot be used to receive a correction sequence for a transmitting frequency band. Therefore, for the signal correction of the receiving link, it is necessary to use an additional transmitting module to send a correction sequence consistent with the receiving frequency band. For the signal correction of the transmitting link, it is necessary to use an additional receiving module to receive a correction sequence consistent with the transmitting frequency band.

Therefore, the need for the additional transmitting module and receiving module inevitably requires the introduction of additional discrete Analog-to-Digital/Digital-to-Analog (ADC/DAC) conversion devices. However, the introduction of ADC/DAC devices lead to problems such as an increased layout area, increased costs, increased pin pressure of logic devices and an increased power supply configuration.

### SUMMARY

The following is a summary of the subject matter set forth in this description. This summary is not intended to limit the scope of protection of the claims.

Embodiments of the present disclosure provide a communication device, a control method, a base station and a computer-readable storage medium.

In accordance with an aspect of the present disclosure, an embodiment provides a communication device. The device includes: a transmitting link configured for transmitting a radio-frequency signal of a first frequency; a receiving link configured for receiving a radio-frequency signal of a second frequency; an antenna module configured for transmitting and receiving a radio-frequency signal, and connected to the transmitting link and the receiving link respectively; a coupling module, connected to the transmitting link, the receiving link and the antenna module respectively; a correction frequency conversion module, arranged on the transmitting link and/or the receiving link; and a logic module, connected to the transmitting link, the receiving link and the correction frequency conversion module respectively, where the logic module is configured for sending a first correction signal to the transmitting link, controlling the correction frequency conversion module to operate so that the first correction signal is modulated to the second frequency by the transmitting link, and the first correction signal is transmitted to the antenna module through the coupling module, and acquiring the first correction signal of the second frequency received by the receiving link from the antenna module, to correct a radio-frequency signal; and/or configured for sending a second correction signal to the transmitting link, so that the second correction signal is modulated to the first frequency by the transmitting link, and the second correction signal is transmitted to the coupling module through the antenna module; controlling the correction frequency conversion module to operate so that the receiving link modulates the second correction signal of the first frequency received from the coupling module; and acquiring the second correction signal received by the receiving link to correct a radio-frequency signal.

In accordance with another aspect of the present disclosure, an embodiment provides a control method for a communication device. The communication device includes: a transmitting link configured for transmitting a radio-frequency signal of a first frequency; a receiving link configured for receiving a radio-frequency signal of a second frequency; an antenna module configured for transmitting and receiving a radio-frequency signal; a coupling module; and a correction frequency conversion module. The antenna module is connected to the transmitting link and the receiving link, respectively. The coupling module is connected to the transmitting link, the receiving link and the antenna module respectively. The correction frequency conversion module is arranged on the transmitting link and/or the receiving link. The control method includes: sending a first correction signal to the transmitting link; controlling the correction frequency conversion module to operate so that the first correction signal is modulated to the second frequency by the transmitting link, and the first correction signal is transmitted to the antenna module through the coupling module; and acquiring the first correction signal modulated to the second frequency that is received by the receiving link from the antenna module, to correct a radio-frequency signal; and/or sending a second correction signal to the transmitting link, so that the second correction signal is modulated to the first frequency by the transmitting link, and the second correction signal is transmitted to the coupling module through the antenna module; controlling the correction frequency conversion module to operate so that the receiving link modulates the second correction signal of the first frequency received from the coupling module; and acquiring the second correction signal received by the receiving link, to correct a radio-frequency signal.

In accordance with another aspect of the present disclosure, an embodiment provides a base station. The base station includes the communication device described above; or includes: a memory, a processor, and a computer program stored in the memory and executable by the processor which, when executed by the processor, causes the processor to implement the control method for a communication device described above.

In accordance with another aspect of the present disclosure, an embodiment further provides a computer-readable storage medium, storing a computer-executable instruction which, when executed by a processor, causes the processor to implement the control method for a communication device described above.

Additional features and advantages of the disclosure will be set forth in the description which follows, and in part will be obvious from the description, or may be learned by the practice of the disclosure. The objects and other advantages of the present disclosure can be realized and obtained by the structures particularly pointed out in the description, claims and accompanying drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure.
FIG. 1 is a schematic diagram of a communication device according to an embodiment of the present disclosure;
FIG. 2 is a schematic diagram of a communication device according to another embodiment of the present disclosure;
FIG. 3 is a schematic diagram of a communication device according to another embodiment of the present disclosure;
FIG. 4 is a schematic diagram of a communication device according to another embodiment of the present disclosure;
FIG. 5 is a schematic diagram of a communication device according to another embodiment of the present disclosure;
FIG. 6 is a schematic diagram of a communication device according to another embodiment of the present disclosure;
FIG. 7 is a flowchart of a control method for a communication device according to an embodiment of the present disclosure;
FIG. 8 is a flowchart of a control method for a communication device according to another embodiment of the present disclosure;
FIG. 9 is a flowchart of a control method for a communication device according to another embodiment of the present disclosure;
FIG. 10 is a flowchart of a control method for a communication device according to another embodiment of the present disclosure;
FIG. 11 is a flowchart of a control method for a communication device according to another embodiment of the present disclosure;
FIG. 12 is a flowchart of a control method for a communication device according to another embodiment of the present disclosure;
FIG. 13 is a hardware circuit diagram of a communication device according to an embodiment of the present disclosure; and
FIG. 14 is a hardware circuit diagram of a communication device according to another embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Embodiments of the present disclosure provide a communication device, a control method, a base station and a computer-readable storage medium. The communication device includes a logic module, a transmitting link, a receiving link, an antenna module, a coupling module and a correction frequency conversion module. The transmitting link is configured for transmitting a radio-frequency signal of a first frequency. The receiving link is configured for receiving a radio-frequency signal of a second frequency. The antenna module is configured for transmitting and receiving a radio-frequency signal, and is connected to the transmitting link and the receiving link, respectively. The coupling module is connected to the transmitting link, the receiving link and the antenna module, respectively. The correction frequency conversion module is arranged on the transmitting link and/or the receiving link. The logic module is connected to the transmitting link, the receiving link and the correction frequency conversion module, respectively. By arranging the correction frequency conversion module on the transmitting link and/or the receiving link, when the correction frequency conversion module is arranged on the transmitting link and is controlled to operate, the transmitting link can transmit a first correction signal of a second frequency, and the receiving link can receive the first correction signal of the second frequency and transmit the first correction signal to the logic module to correct a radio-frequency signal. When the correction frequency conversion module is arranged on the receiving link, the transmitting link can directly transmit a second correction signal of the first frequency, and the correction frequency conversion module is controlled to operate so that the receiving link can receive the second correction signal of the first frequency and transmit the second correction signal to the logic module to correct the radio-frequency signal. Therefore, the radio frequency link can be reused to correct the radio-frequency signal, and there may be no need to arrange any additional transmitting module, receiving module or ADC/DAC device, thereby avoiding the problems such as an increased layout area, increased costs, increased pin pressure of logic devices and an increased power supply configuration.

The embodiments of the present disclosure will be further described in detail below with reference to the accompanying drawings.

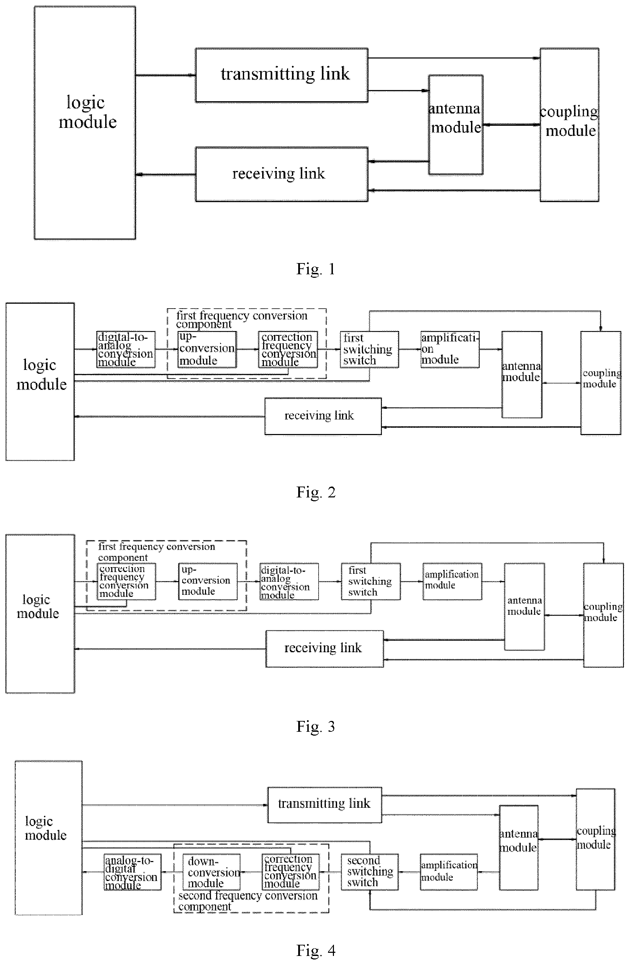

As shown in FIG. 1, FIG. 1 is a schematic diagram of a communication device that can reuse a radio frequency link to correct a radio-frequency signal according to an embodiment of the present disclosure.

As shown in FIG. 1, the communication device includes: a logic module, a transmitting link, a receiving link, an antenna module, a coupling module and a correction frequency conversion module. The transmitting link is configured for transmitting a radio-frequency signal of a first frequency. The receiving link is configured for receiving a radio-frequency signal of a second frequency. The antenna module is configured for transmitting and receiving the radio-frequency signal, and is connected to the transmitting link and the receiving link, respectively. The coupling module is connected to the transmitting link, the receiving link and the antenna module, respectively. The logic module is connected to the transmitting link, the receiving link and the correction frequency conversion module, respectively. The correction frequency conversion module is arranged on the transmitting link and/or the receiving link. The correction frequency conversion module is not shown in FIG. 1.

When the correction frequency conversion module is arranged on the transmitting link, the logic module is configured for sending a first correction signal to the transmitting link and controlling the correction frequency conversion module to operate so that the first correction signal is modulated to the second frequency by the transmitting link, and the first correction signal is transmitted to the antenna module through the coupling module. The logic module acquires the first correction signal of the second frequency received by the receiving link from the antenna module, to correct a radio-frequency signal. Thus, uplink antenna correction can be realized.

When the correction frequency conversion module is arranged on the receiving link, the logic module is configured for sending a second correction signal to the transmitting link, so that the second correction signal is modulated to the first frequency by the transmitting link, and the second correction signal is transmitted to the coupling module through the antenna module; and controlling the correction frequency conversion module to operate, so that the receiving link modulates the second correction signal of the first frequency received from the coupling module. Then, the logic module acquires the second correction signal received by the receiving link to correct a radio-frequency signal. Thus, downlink antenna correction can be realized.

In an embodiment, referring to FIG. 2, the transmitting link includes a digital-to-analog conversion module, an up-conversion module and a first switching switch. The correction frequency conversion module is arranged on the transmitting link, and the correction frequency conversion module and the up-conversion module are connected to form a first frequency conversion component. The logic module, the digital-to-analog conversion module, the first frequency conversion component, the first switching switch and the antenna module are connected in sequence. The first switching switch is further connected to the coupling module and the logic module. The logic module is configured for: sending a first correction signal to the transmitting link; controlling the correction frequency conversion module to operate so that the first correction signal is modulated to a second frequency by the transmitting link; controlling the first switching switch to be connected with the first frequency conversion component and the coupling module, so that the first correction signal is transmitted to the antenna module through the first switching switch and the coupling module; and acquiring the first correction signal of the second frequency received by the receiving link from the antenna module, to correct the radio-frequency signal.

In this embodiment, by arranging the correction frequency conversion module on the transmitting link, the reuse of the transmitting link can be realized. When the communication device may send communication service data externally, a communication service data signal is transmitted from the logic module to the transmitting link. In this case, the correction frequency conversion module is bypassed, and the communication service data signal is modulated to a first frequency by the digital-to-analog conversion module and the up-conversion module of the transmitting link, and then transmitted out through the antenna module. When the radio-frequency signal needs to be corrected, the first correction signal is transmitted from the logic module to the transmitting link, and modulated to the second frequency through the digital-to-analog conversion module, the correction frequency conversion module and the up-conversion module. Then the first correction signal sequentially passes through the first switching switch, the coupling module and the antenna module in sequence to arrive at the receiving link. The receiving link modulates the received first correction signal of the second frequency and transmits the modulated first correction signal to the logic module to correct the radio-frequency signal, thereby realizing uplink antenna correction.

Because the correction frequency conversion module used in this embodiment is arranged behind the digital-to-analog conversion module, the correction frequency conversion module is used to convert an analog signal, and thus may be implemented using an analog mixer.

In addition, the positions of the correction frequency conversion module and the up-conversion module in the first frequency conversion component shown in FIG. 2 can be switched, and may be implemented using two identical devices in practical applications, except that the amplitudes of analog signal conversion by the two devices are different. It should be further noted that the correction frequency conversion module and the up-conversion module forming the first frequency conversion component does not mean that the correction frequency conversion module and the up-conversion module need to be integrated into one device. The correction frequency conversion module and the up-conversion module may also be two independent modules, and may also be integrated into other devices. For example, the up-conversion module and the digital-to-analog conversion module may be integrated into one device.

It can be understood that an amplification module may further be arranged between the first switching switch and the antenna module to amplify a signal to be sent through the antenna module before sending the signal out.

In an embodiment, referring to FIG. 3, the transmitting link includes a digital-to-analog conversion module, an up-conversion module and a first switching switch. The correction frequency conversion module is arranged on the transmitting link, and the correction frequency conversion module and the up-conversion module are connected to form a first frequency conversion component. The logic module, the first frequency conversion component, the digital-to-analog conversion module, the first switching switch and the antenna module are connected in sequence. The first switching switch is further connected to the coupling module and the logic module. The logic module is configured for: sending a first correction signal to the transmitting link; controlling the correction frequency conversion module to operate so that the first correction signal is modulated to a second frequency by the transmitting link; controlling the first switching switch to be connected with the digital-to-analog conversion module and the coupling module, so that the first correction signal is transmitted to the antenna module through the first switching switch and the coupling module; and acquiring the first correction signal of the second frequency received by the receiving link from the antenna module, to correct the radio-frequency signal.

The difference between this embodiment and the embodiment shown in FIG. 2 lies in that the correction frequency conversion module is arranged before the digital-to-analog conversion module. Therefore, the correction frequency conversion module is used to convert a digital signal, and may be implemented using a digital mixer, for example, a Numerically Controlled Oscillator (NCO). Similarly, the positions of the correction frequency conversion module and the up-conversion module in the first frequency conversion component shown in FIG. 3 can be switched. That the correction frequency conversion module and the up-conversion module form the first frequency conversion component does not mean that the correction frequency conversion module and the up-conversion module need to be integrated into one device. The correction frequency conversion module and the up-conversion module may also be two independent modules, and may also be integrated into other devices. For example, the up-conversion module and the digital-to-analog conversion module may be integrated into one device. The other operating principles of the communication device in this embodiment are the same as those in FIG. 2, so the details will not be repeated herein.

In an embodiment, referring to FIG. 4, the receiving link includes a second switching switch, a down-conversion module and an analog-to-digital conversion module. The correction frequency conversion module is arranged on the receiving link, and the correction frequency conversion module and the down-conversion module are connected to form a second frequency conversion component. The antenna module, the second switching switch, the second frequency conversion component, the analog-to-digital conversion module and the logic module are connected in sequence. The second switching switch is further connected to the coupling module and the logic module. The logic module is configured for: sending a second correction signal to the transmitting link so that the second correction signal is modulated to a first frequency, and the second correction signal is transmitted to the coupling module through the antenna module; controlling the second switching switch to be connected with the coupling module and the second frequency conversion component, so that the receiving link receives the second correction signal of the first frequency from the coupling module through the second switching switch; controlling the correction frequency conversion module to operate so that the receiving link modulates the received second correction signal of the first frequency and transmits the modulated second correction signal to the logic module; and acquiring the second correction signal received by the receiving link, to correct the radio-frequency signal.

In this embodiment, by arranging the correction frequency conversion module on the receiving link, the reuse of the receiving link can be realized. When the communication device may need to receive communication service data sent from the outside, the antenna module transmits the received communication service data signal of the first frequency to the transmitting link. In this case, the correction frequency conversion module is bypassed, and the communication service data signal of the first frequency is modulated by the down-conversion module and the analog-to-digital conversion module of the receiving link and then transmitted to the logic module. When the radio-frequency signal needs to be corrected, the second correction signal is transmitted from the logic module to the transmitting link, and modulated by the transmitting link to the first frequency. Then, the second correction signal sequentially passes through the antenna module, the coupling module and the second switching switch to arrive at the receiving link. In this case, the correction frequency conversion module is controlled to operate, and the second correction signal is modulated by the correction frequency conversion module, the down-conversion module and the analog-to-digital conversion module and transmitted to the logic module to correct the radio-frequency signal, thereby realizing downlink antenna correction.

Because the correction frequency conversion module used in this embodiment is arranged before the analog-to-digital conversion module, the correction frequency conversion module is used to convert an analog signal, and may be implemented using an analog mixer.

In addition, the positions of the correction frequency conversion module and the down-conversion module in the second frequency conversion component shown in FIG. 4 can be switched, and may be implemented using two identical devices in practical applications, except that the amplitudes of analog signal conversion by the two devices are different. It should be further noted that the correction frequency conversion module and the down-conversion module forming the second frequency conversion component does not mean that the correction frequency conversion module and the down-conversion module need to be integrated into one device. The correction frequency conversion module and the down-conversion module may also be two independent modules, and may also be integrated into other devices. For example, the down-conversion module and the analog-to-digital conversion module may be integrated into one device.

It can be understood that an amplification module may further be arranged between the antenna module and the second switching switch to amplify a signal received by the antenna module before transferring the signal to the receiving link.

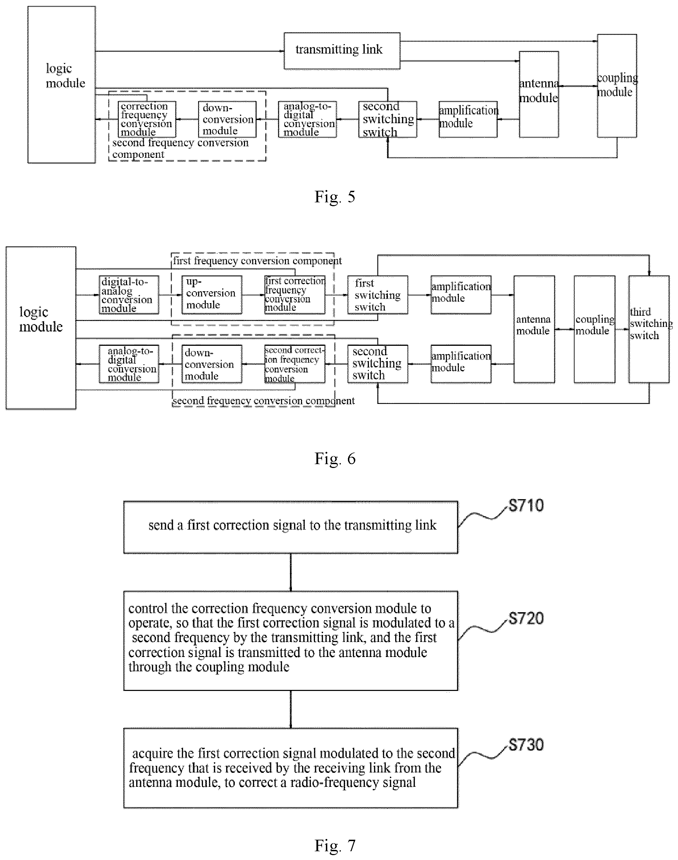

In an embodiment, referring to FIG. 5, the receiving link includes a second switching switch, a down-conversion module and an analog-to-digital conversion module. The correction frequency conversion module is arranged on the receiving link, and the correction frequency conversion module and the down-conversion module are connected to form a second frequency conversion component. The antenna module, the second switching switch, the analog-to-digital conversion module, the second frequency conversion component and the logic module are connected in sequence. The second switching switch is further connected to the coupling module and the logic module. The logic module is configured for: sending a second correction signal to the transmitting link, so that the second correction signal is modulated to the first frequency, and the second correction signal is transmitted to the coupling module through the antenna module; controlling the second switching switch to be connected with the coupling module and the down-conversion module, so that the receiving link receives the second correction signal of the first frequency from the coupling module through the second switching switch; controlling the correction frequency conversion module to operate so that the receiving link modulates the received second correction signal of the first frequency and transmits the modulated second correction signal to the logic module; and acquiring the second correction signal received by the receiving link, to correct the radio-frequency signal.

The difference between this embodiment and the embodiment shown in FIG. 4 lies in that the correction frequency conversion module is arranged after the analog-to-digital conversion module. Therefore, the correction frequency conversion module is used to convert a digital signal, and may be implemented using a digital mixer, for example, a Numerically Controlled Oscillator (NCO). Similarly, the positions of the correction frequency conversion module and the down-conversion module in the second frequency conversion component shown in FIG. 5 can be switched. That the correction frequency conversion module and the down-conversion module form the second frequency conversion component does not mean that the correction frequency conversion module and the down-conversion module need to be integrated into one device. The correction frequency conversion module and the down-conversion module may also be two independent modules, and may also be integrated into other devices. For example, the down-conversion module and the analog-to-digital conversion module may be integrated into one device. The other operating principles of the communication device in this embodiment are the same as those in FIG. 4, so the details will not be repeated herein.

In an embodiment, referring to FIG. 6, the communication device includes a logic module, a transmitting link, a receiving link, an antenna module, a coupling module, a first correction frequency conversion module, a second correction frequency conversion module and a third switching switch.

The transmitting link includes a digital-to-analog conversion module, an up-conversion module and a first switching switch. The first correction frequency conversion module is arranged on the transmitting link, and the first correction frequency conversion module and the up-conversion module are connected to form a first frequency conversion component. The logic module, the digital-to-analog conversion module, the first frequency conversion component, the first switching switch and the antenna module are connected in sequence.

The receiving link includes a second switching switch, a down-conversion module and an analog-to-digital conversion module. The second correction frequency conversion module is arranged on the receiving link, and the second correction frequency conversion module and the down-conversion module are connected to form a second frequency conversion component. The antenna module, the second switching switch, the second frequency conversion component, the analog-to-digital conversion module and the logic module are connected in sequence.

The third switching switch is connected to the first switching switch, the second switching switch and the coupling module, respectively. The first correction frequency conversion module, the second correction module, the first switching switch, the second switching switch and the third switching switch are all connected to the logic module.

The logic module is configured for: sending a first correction signal to the transmitting link; controlling the first correction frequency conversion module to operate so that the first correction signal is modulated to a second frequency by the transmitting link; controlling the first switching switch to be connected with the first frequency conversion component and the third switching switch, and controlling the third switching switch to be connected with the first switching switch and the coupling module, so that the first correction signal is transmitted to the antenna module through the first switching switch, the third switching switch and the coupling module; and acquiring the first correction signal of the second frequency received by the receiving link from the antenna module, to correct the radio-frequency signal; and
is configured for: sending a second correction signal to the transmitting link, so that the second correction signal is modulated to a first frequency; controlling the first switching switch to be connected with the first frequency conversion component and the antenna module, so that the second correction signal is transmitted to the coupling module through the first switching switch and the antenna module; controlling the third switching switch to be connected with the coupling module with the second switching switch, and controlling the second switching switch to be connected with the third switching switch and the second frequency conversion component, so that the receiving link receives the second correction signal of the first frequency from the coupling module through the second switching switch and the third switching switch; controlling the second correction frequency conversion module to operate so that the receiving link modulates the received second correction signal of the first frequency and transmits the modulated second correction signal to the logic module; and acquiring the second correction signal received by the receiving link, to correct the radio-frequency signal.

Because the first correction frequency conversion module used in this embodiment is arranged behind the digital-to-analog conversion module, the first correction frequency conversion module is used to convert an analog signal, and may be implemented using an analog mixer. Because the second correction frequency conversion module used in this embodiment is arranged before the analog-to-digital conversion module, the second correction frequency conversion module is used to convert an analog signal, and may be implemented using an analog mixer.

In addition, the positions of the first correction frequency conversion module and the up-conversion module in the first frequency conversion component shown in FIG. 6 can be switched. That the first correction frequency conversion module and the up-conversion module form the first frequency conversion component does not mean that the first correction frequency conversion module and the up-conversion module need to be integrated into one device. The first correction frequency conversion module and the up-conversion module may also be two independent modules, and may also be integrated into other devices. For example, the up-conversion module and the digital-to-analog conversion module may be integrated into one device. Similarly, the positions of the second correction frequency conversion module and the down-conversion module in the second frequency conversion component can be switched. That the second correction frequency conversion module and the down-conversion module form the second frequency conversion component does not mean that the second correction frequency conversion module and the down-conversion module need to be integrated into one device. The second correction frequency conversion module and the down-conversion module may also be two independent modules, and may also be integrated into other devices. For example, the down-conversion module and the analog-to-digital conversion module may be integrated into one device.

It can be understood that the first frequency conversion component may also be arranged before the digital-to-analog conversion module. In this case, the first correction frequency conversion module in the first frequency conversion component is used to convert a digital signal, and may be implemented using a digital mixer, for example, a Numerically Controlled Oscillator (NCO). Similarly, the second frequency conversion component may also be arranged behind the analog-to-digital conversion module. In this case, the second correction frequency conversion module in the second frequency conversion component is used to convert a digital signal, and may be implemented using a digital mixer, for example, an NCO.

In addition, it can be understood that an amplification module may further be arranged between the first switching switch and the antenna module to amplify a signal to be sent through the antenna module before sending the signal out. Similarly, an amplification module may further be arranged between the antenna module and the second switching switch to amplify a signal received by the antenna module before transmitting the signal to the receiving link.

Based on the structure of the communication device in the above embodiments, embodiments of a control method for a communication device are provided below.

As shown in FIG. 7, FIG. 7 is a flowchart of a control method for a communication device according to an embodiment of the present disclosure. The control method may be applied to the communication device in the embodiment shown in FIG. 1. The correction frequency conversion module is not shown in the figure. The correction frequency conversion module is arranged on the transmitting link. The control method includes, but not limited to, the following steps S710 to S730.

At S710, a first correction signal is sent to the transmitting link.

At S720, the correction frequency conversion module is controlled to operate so that the first correction signal is modulated to the second frequency by the transmitting link, and the first correction signal is transmitted to the antenna module through the coupling module.

At S730, the first correction signal modulated to the second frequency that is received by the receiving link from the antenna module is acquired, to correct a radio-frequency signal.

In this embodiment, when the radio-frequency signal needs to be corrected, the first correction signal is transmitted from the logic module to the transmitting link, the correction frequency conversion module is controlled to operate so that the first correction signal is modulated to the second frequency by the transmitting link. Then, the first correction signal passes through the coupling module and the antenna module to arrive at the receiving link. The receiving link modulates the received first correction signal of the second frequency and transmits the modulated first correction signal to the logic module to correct the radio-frequency signal, thereby realizing uplink antenna correction.

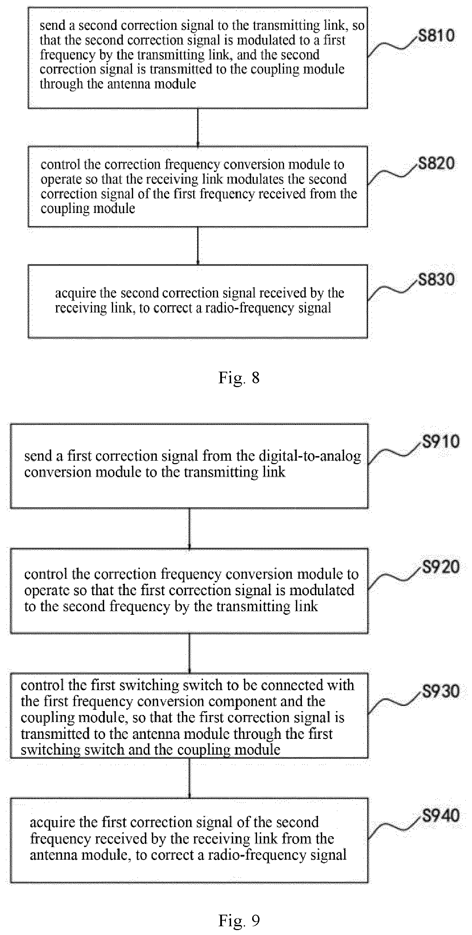

As shown in FIG. 8, FIG. 8 is a flowchart of a control method for a communication device according to another embodiment of the present disclosure. The control method may be applied to the communication device in the embodiment shown in FIG. 1. The correction frequency conversion module is not shown in the figure. The correction frequency conversion module is arranged on the receiving link. The control method includes, but not limited to, the following steps S810 to S830.

At S810, a second correction signal is sent to the transmitting link, so that the second correction signal is modulated to the first frequency by the transmitting link, and the second correction signal is transmitted to the coupling module through the antenna module.

At S820, the correction frequency conversion module is controlled to operate so that the receiving link modulates the second correction signal of the first frequency received from the coupling module.

At S830, the second correction signal received by the receiving link is acquired, to correct a radio-frequency signal.

In this embodiment, when the radio-frequency signal needs to be corrected, the second correction signal is transmitted from the logic module to the transmitting link, and modulated by the transmitting link to the first frequency. Then, the second correction signal passes through the antenna module and the coupling module to arrive at the receiving link. In this case, the correction frequency conversion module is controlled to operate, and the second correction signal is modulated by the receiving link and transmitted to the logic module to correct the radio-frequency signal, thereby realizing downlink antenna correction.

As shown in FIG. 9, FIG. 9 is a flowchart of a control method for a communication device according to another embodiment of the present disclosure. The control method may be applied to the communication device in the embodiment shown in FIG. 2. The method includes, but not limited to, the following steps S910 to S940.

At S910, a first correction signal is sent from the digital-to-analog conversion module to the transmitting link.

At S920, the correction frequency conversion module is controlled to operate so that the first correction signal is modulated to the second frequency by the transmitting link.

At S930, the first switching switch is controlled to be connected with the first frequency conversion component and the coupling module, so that the first correction signal is transmitted to the antenna module through the first switching switch and the coupling module.

At S940, the first correction signal of the second frequency received by the receiving link from the antenna module is acquired, to correct a radio-frequency signal.

In this embodiment, when the radio-frequency signal needs to be corrected, the first correction signal is transmitted from the logic module to the transmitting link, and modulated to the second frequency through the digital-to-analog conversion module, the up-conversion module and the correction frequency conversion module. Then, the first correction signal sequentially passes through the first switching switch, the coupling module and the antenna module to arrive at the receiving link. The receiving link modulates the received first correction signal of the second frequency and transmits the modulated first correction signal to the logic module to correct the radio-frequency signal, thereby realizing uplink antenna correction.

The control method applied to the communication device in FIG. 3 is basically the same as the process in this embodiment, except for the following two aspects. First, at S910, the first correction signal is sent from the first frequency conversion component to the transmitting link, not from the digital-to-analog conversion module to the transmitting link. Second, at S930, the first switching switch is controlled to be connected with the digital-to-analog conversion module and the coupling module, not to be connected with the first frequency conversion component and the coupling module.

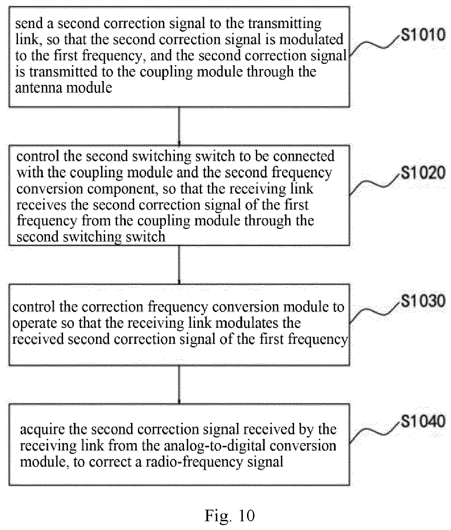

As shown in FIG. 10, FIG. 10 is a flowchart of a control method for a communication device according to another embodiment of the present disclosure. The control method may be applied to the communication device in the embodiment shown in FIG. 4. The method includes, but not limited to, the following steps S1010 to S1040.

At S1010, a second correction signal is sent to the transmitting link, so that the second correction signal is modulated to the first frequency, and the second correction signal is transmitted to the coupling module through the antenna module.

At S1020, the second switching switch to is controlled to be connected with the coupling module and the second frequency conversion component, so that the receiving link receives the second correction signal of the first frequency from the coupling module through the second switching switch.

At S1030, the correction frequency conversion module is controlled to operate so that the receiving link modulates the received second correction signal of the first frequency.

At S1040, the second correction signal received by the receiving link is acquired from the analog-to-digital conversion module, to correct a radio-frequency signal.

In this embodiment, when the radio-frequency signal needs to be corrected, the second correction signal is transmitted from the logic module to the transmitting link, and modulated by the transmitting link to the first frequency. Then, the second correction signal sequentially passes through the antenna module, the coupling module and the second switching switch to arrive at the receiving link. In this case, the correction frequency conversion module is controlled to operate, and the second correction signal is modulated by the correction frequency conversion module, the down-conversion module and the analog-to-digital conversion module and transmitted to the logic module to correct the radio-frequency signal, thereby realizing downlink antenna correction.

The control method applied to the communication device in FIG. 5 is basically the same as the process in this embodiment, except for the following two aspects. First, at S1020, the second switching switch is controlled to be connected with the coupling module and the analog-to-digital conversion module, not to be connected with the coupling module and the second frequency conversion component. Second, at S1040, the second correction signal is acquired from the second frequency conversion component, not from the analog-to-digital conversion module.

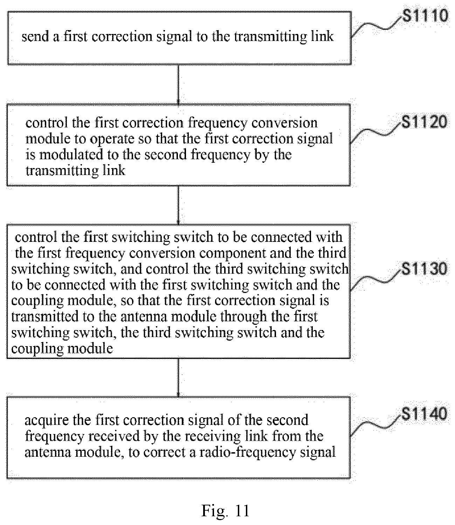

As shown in FIG. 11, FIG. 11 is a flowchart of a control method for a communication device according to another embodiment of the present disclosure. The control method may be applied to the communication device in the embodiment shown in FIG. 6. The method includes, but not limited to, the following steps S1110 to S1140.

At S1110, a first correction signal is sent to the transmitting link.

At S 1120, the first correction frequency conversion module is controlled to operate so that the first correction signal is modulated to the second frequency by the transmitting link.

At S 1130, the first switching switch is controlled to be connected with the first frequency conversion component and the third switching switch, and the third switching switch is controlled to be connected with the first switching switch and the coupling module, so that the first correction signal is transmitted to the antenna module through the first switching switch, the third switching switch and the coupling module.

At S 1140, the first correction signal of the second frequency received by the receiving link from the antenna module is acquired, to correct a radio-frequency signal.

This embodiment is similar to the control method in FIG. 9, and the difference lies in that the control of the third switching switch is introduced, with other functions and effects being the same, so the details will not be repeated herein.

In addition, if the first frequency conversion component in FIG. 6 is arranged before the digital-to-analog conversion module, at S1130, the first switching switch is controlled to be connected with the digital-to-analog conversion module and the third switching switch, not to be connected with the first frequency conversion component and the third switching switch.

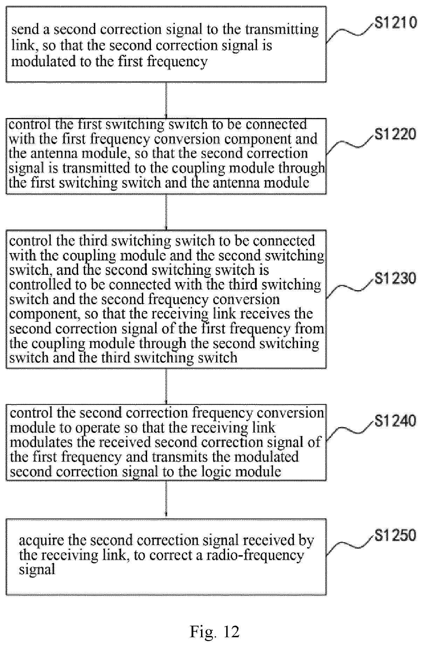

As shown in FIG. 12, FIG. 12 is a flowchart of a control method for a communication device according to another embodiment of the present disclosure. The control method may be applied to the communication device in the embodiment shown in FIG. 6. The method includes, but not limited to, the following steps S1210 to S1250.

At S1210, a second correction signal is sent to the transmitting link, so that the second correction signal is modulated to the first frequency.

At S1220, the first switching switch is controlled to be connected with the first frequency conversion component and the antenna module, so that the second correction signal is transmitted to the coupling module through the first switching switch and the antenna module.

At S1230, the third switching switch is controlled to be connected with the coupling module and the second switching switch, and the second switching switch is controlled to be connected with the third switching switch and the second frequency conversion component, so that the receiving link receives the second correction signal of the first frequency from the coupling module through the second switching switch and the third switching switch.

At S1240, the second correction frequency conversion module is controlled to operate so that the receiving link modulates the received second correction signal of the first frequency and transmits the modulated second correction signal to the logic module.

At S1250, the second correction signal received by the receiving link is acquired, to correct a radio-frequency signal.

This embodiment is similar to the control method in FIG. 10, and the difference lies in that the control of the third switching switch is introduced, with other functions and effects being the same, so the details will not be repeated herein.

In addition, if the first frequency conversion component in FIG. 6 is arranged before the digital-to-analog conversion module, at S1220, the first switching switch is controlled to be connected with the digital-to-analog conversion module and the antenna module, not to be connected with the first frequency conversion component and the antenna module. If the second frequency conversion component in FIG. 6 is arranged behind the analog-to-digital conversion module, at S1230, the second switching switch is controlled to be connected with the third switching switch and the analog-to-digital conversion module, not to be connected with the third switching switch and the second frequency conversion component.

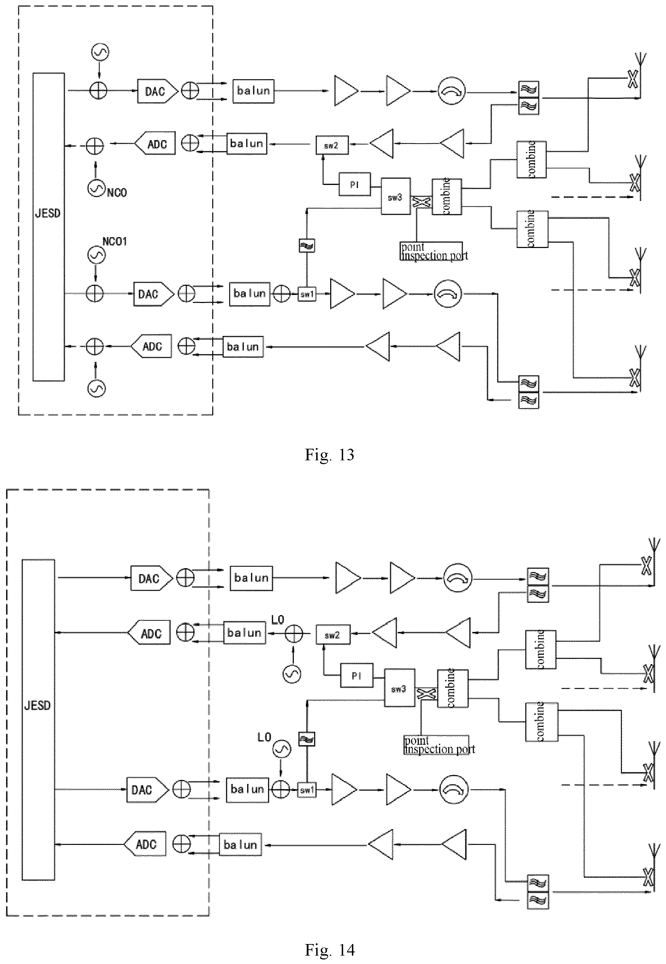

Referring to FIG. 13, a specific hardware circuit embodiment of the communication device in the above embodiment of the present disclosure is given. Based on the hardware circuit in FIG. 13, a process of correcting a radio-frequency signal is as follows.

For example, in the communication device, a normal operating frequency range of the transmitting link is 1805 MHz to 1880 MHz, and a normal operating frequency range of the receiving link is 1710 MHz to 1785 MHz.
1. Uplink correction: The first correction signal is transmitted from the logic module to the reused transmitting link through a dual rate motor integrated protector (JESD). In this case, the frequency of a digital signal before reaching a Numerically Controlled Oscillator (NCO) is 0 MHz, the NCO function is activated, and the frequency shifting capacity of the NCO is (1785+1710)/2 - (1880+1805)/2=-95 MHz. After passing through the NCO, the frequency of an intermediate frequency signal becomes -95 MHz. After passing through a DAC, the signal is up-converted by an external fast LO up-conversion module, where LO=(1880+1805)/2=1842.5 MHz. The output analog signal has a frequency of 1747.5 MHz, which is equal to an uplink center frequency. In this case, a switch sw1 on the transmitting link is connected with the transmitting link and the coupling module, and the first correction signal is distributed to each receiving channel through the coupling module.
2. Downlink correction: The second correction signal is transmitted from the logic module to the normal transmitting link through a dual rate motor integrated protector (JESD). In this case, the NCO on the transmitting link is bypassed. The signal outputted after up-conversion by the transmitting link has a frequency of 1842.5 MHz After arriving at the coupling module from the antenna module, the second correction signal is finally combined, and reaches the receiving link through a switch sw3 and a switch sw2. After passing through an ADC device, the intermediate frequency signal shall has a frequency of 95 MHz. Then after passing through an NCO, the intermediate frequency signal becomes 0 MHz and then transmitted to JESD.

Referring to FIG. 14, another specific hardware circuit embodiment of the communication device in the above embodiment of the present disclosure is given. This embodiment is different from the embodiment shown in FIG. 13 in that the NCO module is not used, and instead, external fast LO up-conversion and down-conversion modules are used to simulate up and down auxiliary conversion.
1. Uplink correction: The logic module sends a 0 MHz digital signal. After up-conversion by a DAC, a (1880+1805)/2=1842.5 MHz analog signal is outputted. After down-conversion by an auxiliary LO to -95 MHz, a first correction signal of 1747.5 MHz is outputted.
2. Downlink correction: The second correction signal is transmitted from the logic module to the normal transmitting link through a dual rate motor integrated protector (JESD). In this case, the NCO on the transmitting link is bypassed. The signal outputted after up-conversion by the transmitting link is an 1842.5 MHz signal. After arriving at the coupling module from the antenna module, the second correction signal is finally combined, and reaches the receiving link through the switch sw3 and the switch sw2. After down-conversion by the auxiliary LO to -95 MHz, a second correction signal of 1747.5 MHz is obtained, which is then successfully received by an ADC that operates in an uplink frequency band.

In addition, an embodiment of the present disclosure provides a base station. The base station includes the communication device described above; or including:
a memory, a processor, and a computer program stored in the memory and executable by the processor which, when executed by the processor, causes the processor to implement the control method for a communication device.

It should be noted that the base station in this embodiment may be the base station in the embodiment shown in FIG. 1, FIG. 2, FIG. 3, FIG. 4, FIG. 5, or FIG. 6, and these embodiments all belong to the same inventive concept and therefore have the same implementation principle and technical effects, so the details will not be repeated herein.

The non-transitory software program and instructions required to implement the control method for a communication device of the foregoing embodiments are stored in the memory which, when executed by the processor, cause the processor to implement the control method of the foregoing embodiments, for example, implement the method steps S710 to S730 in FIG. 7, the method steps S810 to S830 in FIG. 8, the method steps S910 to S940 in FIG. 9, the method steps S1010 to S1040 in FIG. 10, the method steps S1110 to S1140 in FIG. 11, and the method steps S1210 to S1250 in FIG. 12.

The base station embodiments described above are merely illustrative. The units described as separate components may or may not be physically separated, i.e., may be located in one place or may be distributed over a plurality of network units. Some or all of the modules may be selected according to actual needs to achieve the objects of the scheme of this embodiment.

In addition, an embodiment of the present disclosure further provides a computer-readable storage medium, storing a computer-executable instruction which, when executed by a processor or controller, for example, by a processor in the terminal embodiment described above, may cause the processor to implement the control method for a communication device of the foregoing embodiments, for example, implement the method steps S710 to S730 in FIG. 7, the method steps S810 to S830 in FIG. 8, the method steps S910 to S940 in FIG. 9, the method steps S1010 to S1040 in FIG. 10, the method steps S1110 to S1140 in FIG. 11, and the method steps S1210 to S1250 in FIG. 12.

An embodiment of the present disclosure includes: a communication device. The communication device includes a logic module, a transmitting link, a receiving link, an antenna module, a coupling module and a correction frequency conversion module. The transmitting link is configured for transmitting a radio-frequency signal of a first frequency. The receiving link is configured for receiving a radio-frequency signal of a second frequency. The antenna module is configured for transmitting and receiving the radio-frequency signal, and is connected to the transmitting link and the receiving link, respectively. The coupling module is connected to the transmitting link, the receiving link and the antenna module, respectively. The correction frequency conversion module is arranged on the transmitting link and/or the receiving link. The logic module is connected to the transmitting link, the receiving link and the correction frequency conversion module, respectively. When the communication device may need to send communication service data externally, the communication service data signal is transmitted from the logic module to the transmitting link, modulated to the first frequency by the transmitting link, and then transmitted out through the antenna module. When the communication device may need to receive communication service data sent from the outside, the antenna module receives the radio-frequency signal of the second frequency and transmits the radio-frequency signal of the second frequency to the receiving link, and the receiving link transmits the received radio-frequency signal of the second frequency to the logic module. According to the scheme provided in the embodiments of the present disclosure, by arranging the correction frequency conversion module on the transmitting link and/or the receiving link, when the correction frequency conversion module is arranged on the transmitting link and is controlled to operate, the transmitting link can transmit a first correction signal of a second frequency, and the receiving link can receive the first correction signal of the second frequency and transmit the first correction signal to the logic module to correct a radio-frequency signal. When the correction frequency conversion module is arranged on the receiving link, the transmitting link can directly transmit a second correction signal of the first frequency, and the correction frequency conversion module is controlled to operate so that the receiving link can receive the second correction signal of the first frequency and transmit the second correction signal to the logic module to correct the radio-frequency signal. Therefore, the radio frequency link can be reused to correct the radio-frequency signal without having to arrange any additional transmitting module, receiving module or ADC/DAC device, thereby avoiding the problems such as an increased layout area, increased costs, increased pin pressure of logic devices and an increased power supply configuration.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer readable instructions, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

Although some implementations of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A communication device, comprising:
a transmitting link configured for transmitting a radio-frequency signal of a first frequency;
a receiving link configured for receiving a radio-frequency signal of a second frequency;
an antenna module configured for transmitting and receiving a radio-frequency signal, and connected to the transmitting link and the receiving link, respectively;
a coupling module connected to the transmitting link, the receiving link and the antenna module, respectively;
a correction frequency conversion module arranged on the transmitting link and/or the receiving link; and
a logic module connected to the transmitting link, the receiving link and the correction frequency conversion module, respectively;
wherein the logic module is configured for: sending a first correction signal to the transmitting link, controlling the correction frequency conversion module to operate so that the first correction signal is modulated to the second frequency by the transmitting link, and the first correction signal is transmitted to the antenna module through the coupling module, and acquiring the first correction signal of the second frequency received by the receiving link from the antenna module, to correct the radio-frequency signal;
and/or
configured for: sending a second correction signal to the transmitting link, so that the second correction signal is modulated to the first frequency by the transmitting link, and the second correction signal is transmitted to the coupling module through the antenna module, controlling the correction frequency conversion module to operate so that the receiving link modulates the second correction signal of the first frequency received from the coupling module, and acquiring the second correction signal received by the receiving link to correct the radio-frequency signal.

2. The communication device of claim 1, wherein the transmitting link comprises a digital-to-analog conversion module, an up-conversion module and a first switching switch; the correction frequency conversion module and the up-conversion module are connected to form a first frequency conversion component; the logic module, the digital-to-analog conversion module, the first frequency conversion component, the first switching switch and the antenna module are connected in sequence, or the logic module, the first frequency conversion component, the digital-to-analog conversion module, the first switching switch and the antenna module are connected in sequence; the first switching switch is further connected to the coupling module and the logic module; and
the logic module is configured for:
sending the first correction signal to the transmitting link;
controlling the correction frequency conversion module to operate so that the first correction signal is modulated to the second frequency by the transmitting link;
controlling the first switching switch to be connected with the first frequency conversion component and the coupling module or to be connected with the digital-to-analog conversion module and the coupling module, so that the first correction signal is transmitted to the antenna module through the first switching switch and the coupling module; and
acquiring the first correction signal of the second frequency received by the receiving link from the antenna module, to correct the radio-frequency signal.

3. The communication device of claim 1, wherein the receiving link comprises a second switching switch, a down-conversion module and an analog-to-digital conversion module; the correction frequency conversion module and the down-conversion module are connected to form a second frequency conversion component; the antenna module, the second switching switch, the second frequency conversion component, the analog-to-digital conversion module and the logic module are connected in sequence, or the antenna module, the second switching switch, the analog-to-digital conversion module, the second frequency conversion component and the logic module are connected in sequence; the second switching switch is further connected to the coupling module and the logic module; and
the logic module is configured for:
sending the second correction signal to the transmitting link, so that the second correction signal is modulated to the first frequency, and the second correction signal is transmitted to the coupling module through the antenna module;
controlling the second switching switch to be connected with the coupling module and the second frequency conversion component or to be connected with the coupling module and the analog-to-digital conversion module, so that the receiving link receives the second correction signal of the first frequency from the coupling module through the second switching switch;
controlling the correction frequency conversion module to operate so that the receiving link modulates the received second correction signal of the first frequency and transmits the modulated second correction signal to the logic module; and
acquiring the second correction signal received by the receiving link, to correct the radio-frequency signal.

4. The communication device of claim 1, wherein:
the transmitting link comprises a digital-to-analog conversion module, an up-conversion module and a first switching switch; the receiving link comprises a second switching switch, a down-conversion module and an analog-to-digital conversion module; the correction frequency conversion module comprises a first correction frequency conversion module and a second correction frequency conversion module, the first correction frequency conversion module and the up-conversion module are connected to form a first frequency conversion component, and the second correction frequency conversion module and the down-conversion module are connected to form a second frequency conversion component;
the logic module, the digital-to-analog conversion module, the first frequency conversion component, the first switching switch and the antenna module are connected in sequence; the antenna module, the second switching switch, the second frequency conversion component, the analog-to-digital conversion module and the logic module are connected in sequence;
the communication device further comprises a third switching switch, and the third switching switch is connected to the first switching switch, the second switching switch and the coupling module, respectively;
the first correction frequency conversion module, the second correction module, the first switching switch, the second switching switch and the third switching switch are all connected to the logic module; and
the logic module is configured for:
sending the first correction signal to the transmitting link;
controlling the first correction frequency conversion module to operate so that the first correction signal is modulated to the second frequency by the transmitting link;
controlling the first switching switch to be connected with the first frequency conversion component and the third switching switch, and controlling the third switching switch to be connected with the first switching switch and the coupling module, so that the first correction signal is transmitted to the antenna module through the first switching switch, the third switching switch and the coupling module; and
acquiring the first correction signal of the second frequency received by the receiving link from the antenna module, to correct the radio-frequency signal; and
is configured for:
sending the second correction signal to the transmitting link, so that the second correction signal is modulated to the first frequency;
controlling the first switching switch to be connected with the first frequency conversion component and the antenna module, so that the second correction signal is transmitted to the coupling module through the first switching switch and the antenna module;
controlling the third switching switch to be connected with the coupling module and the second switching switch, and controlling the second switching switch to be connected with the third switching switch and the second frequency conversion component, so that the receiving link receives the second correction signal of the first frequency from the coupling module through the second switching switch and the third switching switch;
controlling the second correction frequency conversion module to operate so that the receiving link modulates the received second correction signal of the first frequency; and
acquiring the second correction signal received by the receiving link, to correct the radio-frequency signal.

5. The communication device of claim 1, wherein:
the transmitting link comprises a digital-to-analog conversion module, an up-conversion module and a first switching switch; the receiving link comprises a second switching switch, a down-conversion module and an analog-to-digital conversion module; the correction frequency conversion module comprises a first correction frequency conversion module and a second correction frequency conversion module, the first correction frequency conversion module and the up-conversion module are connected to form a first frequency conversion component, and the second correction frequency conversion module and the down-conversion module are connected to form a second frequency conversion component;
the logic module, the first frequency conversion component, the digital-to-analog conversion module, the first switching switch and the antenna module are connected in sequence; the antenna module, the second switching switch, the analog-to-digital conversion module, the second frequency conversion component and the logic module are connected in sequence;
the communication device further comprises a third switching switch, and the third switching switch is connected to the first switching switch, the second switching switch and the coupling module, respectively;
the first correction frequency conversion module, the second correction module, the first switching switch, the second switching switch and the third switching switch are all connected to the logic module; and
the logic module is configured for:
sending the first correction signal to the transmitting link;
controlling the first correction frequency conversion module to operate so that the first correction signal is modulated to the second frequency by the transmitting link;
controlling the first switching switch to be connected with the digital-to-analog conversion module and the third switching switch, and controlling the third switching switch to be connected with the first switching switch and the coupling module, so that the first correction signal is transmitted to the antenna module through the first switching switch, the third switching switch and the coupling module; and
acquiring the first correction signal of the second frequency received by the receiving link from the antenna module, to correct the radio-frequency signal; and
is configured for:
sending the second correction signal to the transmitting link, so that the second correction signal is modulated to the first frequency;
controlling the first switching switch to be connected with the digital-to-analog conversion module and the antenna module, so that the second correction signal is transmitted to the coupling module through the first switching switch and the antenna module;
controlling the third switching switch to be connected with the coupling module and the second switching switch, and controlling the second switching switch to be connected with the third switching switch and the analog-to-digital conversion module, so that the receiving link receives the second correction signal of the first frequency from the coupling module through the second switching switch and the third switching switch;
controlling the second correction frequency conversion module to operate so that the receiving link modulates the received second correction signal of the first frequency; and
acquiring the second correction signal received by the receiving link, to correct the radio-frequency signal.

6. A control method for a communication device, wherein the communication device comprises: a transmitting link configured for transmitting a radio-frequency signal of a first frequency; a receiving link configured for receiving a radio-frequency signal of a second frequency; an antenna module configured for transmitting and receiving the radio-frequency signal; a coupling module; and a correction frequency conversion module; the antenna module is connected to the transmitting link and the receiving link respectively; the coupling module is connected to the transmitting link, the receiving link and the antenna module respectively; the correction frequency conversion module is arranged on the transmitting link and/or the receiving link; and
the control method comprises:
sending a first correction signal to the transmitting link;
controlling the correction frequency conversion module to operate so that the first correction signal is modulated to a second frequency by the transmitting link, and the first correction signal is transmitted to the antenna module through the coupling module; and
acquiring the first correction signal modulated to the second frequency which is received by the receiving link from the antenna module, to correct the radio-frequency signal;
and/or
sending a second correction signal to the transmitting link, so that the second correction signal is modulated to the first frequency by the transmitting link, and the second correction signal is transmitted to the coupling module through the antenna module;
controlling the correction frequency conversion module to operate so that the receiving link modulates the second correction signal of the first frequency received from the coupling module; and
acquiring the second correction signal received by the receiving link, to correct the radio-frequency signal.

7. The control method for a communication device of claim 6, wherein the transmitting link comprises a digital-to-analog conversion module, an up-conversion module and a first switching switch; the correction frequency conversion module and the up-conversion module are connected to form a first frequency conversion component; the digital-to-analog conversion module, the first frequency conversion component, the first switching switch and the antenna module are connected in sequence, or the first frequency conversion component, the digital-to-analog conversion module, the first switching switch and the antenna module are connected in sequence; the first switching switch is further connected to the coupling module; and
the control method comprises:
sending the first correction signal to the transmitting link from the digital-to-analog conversion module or the first frequency conversion component;
controlling the correction frequency conversion module to operate so that the first correction signal is modulated to the second frequency by the transmitting link;
controlling the first switching switch to be connected with the first frequency conversion component and the coupling module or to be connected with the digital-to-analog conversion module and the coupling module, so that the first correction signal is transmitted to the antenna module through the first switching switch and the coupling module; and
acquiring the first correction signal of the second frequency received by the receiving link from the antenna module, to correct the radio-frequency signal.

8. The control method for a communication device of claim 6, wherein the receiving link comprises a second switching switch, a down-conversion module and an analog-to-digital conversion module; the correction frequency conversion module and the down-conversion module are connected to form a second frequency conversion component; the antenna module, the second switching switch, the second frequency conversion component and the analog-to-digital conversion module are connected in sequence, or the antenna module, the second switching switch, the analog-to-digital conversion module and the second frequency conversion component are connected in sequence; the second switching switch is further connected to the coupling module; and
the control method comprises:
sending the second correction signal to the transmitting link, so that the second correction signal is modulated to the first frequency, and the second correction signal is transmitted to the coupling module through the antenna module;
controlling the second switching switch to be connected with the coupling module and the second frequency conversion component or to be connected with the coupling module and the analog-to-digital conversion module, so that the receiving link receives the second correction signal of the first frequency from the coupling module through the second switching switch;
controlling the correction frequency conversion module to operate so that the receiving link modulates the received second correction signal of the first frequency; and
acquiring, from the analog-to-digital conversion module or the second frequency conversion component, the second correction signal received by the receiving link, to correct the radio-frequency signal.

9. The control method for a communication device of claim 6, wherein:
the transmitting link comprises a digital-to-analog conversion module, an up-conversion module and a first switching switch; the receiving link comprises a second switching switch, a down-conversion module and an analog-to-digital conversion module; the correction frequency conversion module comprises a first correction frequency conversion module and a second correction frequency conversion module, the first correction frequency conversion module and the up-conversion module are connected to form a first frequency conversion component, and the second correction frequency conversion module and the down-conversion module are connected to form a second frequency conversion component;
the digital-to-analog conversion module, the first frequency conversion component, the first switching switch and the antenna module are connected in sequence, or the first frequency conversion component, the digital-to-analog conversion module, the first switching switch and the antenna module are connected in sequence; the antenna module, the second switching switch, the second frequency conversion component and the analog-to-digital conversion module are connected in sequence, or the antenna module, the second switching switch, the analog-to-digital conversion module and the second frequency conversion component are connected in sequence;
the communication device further comprises a third switching switch, and the third switching switch is respectively connected to the first switching switch, the second switching switch and the coupling module; and
the control method comprises:
sending the first correction signal to the transmitting link from the digital-to-analog conversion module or the first frequency conversion component;
controlling the first correction frequency conversion module to operate so that the first correction signal is modulated to the second frequency by the transmitting link;
controlling the first switching switch to be connected with the first frequency conversion component and the third switching switch or to be connected with the digital-to-analog conversion module and the third switching switch, and controlling the third switching switch to be connected with the first switching switch and the coupling module, so that the first correction signal is transmitted to the antenna module through the first switching switch, the third switching switch and the coupling module; and
acquiring the first correction signal of the second frequency received by the receiving link from the antenna module, to correct the radio-frequency signal; and
comprises:
sending the second correction signal to the transmitting link, so that the second correction signal is modulated to the first frequency;
controlling the first switching switch to be connected with the first frequency conversion component and the antenna module or to be connected with the digital-to-analog conversion module and the antenna module, so that the second correction signal is transmitted to the coupling module through the first switching switch and the antenna module;
controlling the third switching switch to be connected with the coupling module and the second switching switch, and controlling the second switching switch to be connected with the third switching switch and the second frequency conversion component or to be connected with the third switching switch and the analog-to-digital conversion module, so that the receiving link receives the second correction signal of the first frequency from the coupling module through the second switching switch and the third switching switch;
controlling the second correction frequency conversion module to operate so that the receiving link modulates the received second correction signal of the first frequency; and
acquiring, from the analog-to-digital conversion module or the second frequency conversion component, the second correction signal received by the receiving link, to correct the radio-frequency signal.

10. A base station, comprising the communication device of any one of claims 1 to 5;
or comprising:
a memory, a processor, and a computer program stored in the memory and executable by the processor which, when executed by the processor, causes the processor to perform the control method for a communication device of any one of claims 6 to 9.

11. A computer-readable storage medium, storing a computer-executable instruction which, when executed by a processor, causes the processor to perform the control method for a communication device of any one of claims 6 to 9.
